## Europäisches Patentamt

## European Patent Office

## Office européen des brevets

(19)

(11) Veröffentlichungsnummer: **0 053 780**
**A2**

(12) **EUROPÄISCHE PATENTANMELDUNG**

(21) Anmeldenummer: **81110003.1**

(22) Anmeldetag: **30.11.81**

(51) Int. Cl.³: **G 02 C 7/02**

(30) Priorität: **08.12.80 US 213884**

(43) Veröffentlichungstag der Anmeldung:
**16.06.82 Patentblatt 82/24**

(84) Benannte Vertragsstaaten:
**AT BE CH DE FR GB IT LI LU NL SE**

(71) Anmelder: **Buckbee-Mears Company**
**245 E. 6th Street**
**St. Paul Minnesota 55101(US)**

(72) Erfinder: **Davis, John K.**
**Prospect Street**
**East Woodstock, Connecticut 06244(US)**

(72) Erfinder: **Torgersen, Daniel L.**
**1221 Eight Avenue North**
**Sauk Rapids, Minnesota 56379(US)**

(74) Vertreter: **Schickedanz, Willi**
**Langener Strasse 70**
**D-6050 Offenbach/Main(DE)**

(54) **Asphärische Augenlinsen und ein Verfahren zur Herstellung dieser Linsen.**

(57) Die Erfindung betrifft asphärische Augenlinsen (10) und ein Verfahren zur Herstellung dieser Augenlinsen (10). Insbesondere betrifft sie Aphakie-Linsen mit einer Okularzylinderoberfläche, wobei die Meridiane (11,12) senkrecht aufeinander stehen. Bei dem erfindungsgemäßen Verfahren wird eine Linse mit einer bekannten Kugelbrechkraft ausgewählt und hierfür die Tangentialkurve bestimmt. Die zweite Linsenoberfläche wird so ausgewählt, daß das Differential zwischen der Brechkraft der ersten und der zweiten Linsenoberfläche einen bestimmten Wert hat, der ungefähr gleich dem Zylinderwert der Aphakie-Linse ist. Es werden so-dann die beiden Tangentialkurven miteinander verglichen, um den Abstand (A) zu ermitteln, der die im wesentlichen gleichen Werte der Tangentialkurven bewirkt. Anschließend wird eine Linse hergestellt, deren Pol von der Normal-Sichtlinie durch die Linse um einen Betrag versetzt ist, der ungefähr gleich dem erwähnten Abstand (A) ist.

EP 0 053 780 A2

Croydon Printing Company Ltd.

P 222-BM/EU

Die Erfindung betrifft asphärische Augenlinsen und ein Verfahren zur Herstellung dieser Linsen.

Asphärische Augengläser oder -linsen kommen häufig bei Personen zur Anwendung, die eine Katarakt- oder Grauer Star-Operation hinter sich haben. Bei einer solchen Operation wird in der Regel die Kristallinse des Auges entfernt, d.h. es liegt nach der Operation eine Aphakie vor.

Es sind bereits asphärische Aphakie-Linsen bekannt, die jedoch einige Nachteile aufweisen. So enthalten die Formeln zum Schleifen dieser Linsen torische und zylindrische Komponenten, was bedeutet, daß die Brechkraft im horizontalen Meridian von der Brechkraft im vertikalen Meridian verschieden ist. Die größere Brechkraft liegt gewöhnlich im vertikalen Meridian, während die schwächere Brechkraft im horizontalen Meridian liegt. Die größere und kleinere Brechkraft können auch einige Grade neben den genannten Hauptmeridianen liegen. Demzufolge ermöglicht eine asphärische Linse, die eine Kurve im vertikalen Meridian aufweist, um die Sehfeldfehler im vertikalen Meridian auszugleichen und die eine weniger starke Asphäre im horizontalen Meridian aufweist, um entsprechende Fehler zu korrigieren, ein größeres Sehfeld für den Träger. Wenn man beispielsweise die tangentialen und sagittalen Fehler beim schrägen Sehen in erster Linie korrigieren will, so können hierfür eine Reihe von bekannten Maßnahmen herangezogen werden, die entweder Iterationsverfahren oder direkte Lösungen von geeigneten trigonometrischen Gleichungen betreffen. Die polynomischen Terme eines Ausdrucks, der die Linsenkurve in ihrer Abweichung von der Kugelform vom Zentrum nach außen beschreibt, können leicht abgeleitet werden.

Falls man die Tangentialfehler nahe Null halten möchte, ist es z.B. möglich, für eine sphärische Linse mit 9.25 Dioptrien oder mit 14.00 Dioptrien, je nach Wunsch, eine geeignete konkave Okularkurve auszuwählen und die Frontkurve dadurch zu konstruieren, daß man die Koeffizienten mit den oben erwähnten Methoden bestimmt. Mit Hilfe dieser dem Fachmann geläufigen Verfahren werden die Koeffizienten so bestimmt, daß die Tangentialfehler über ein Gesichtsfeld von 10 bis 35 Grad nahezu Null bleiben, d.h. innerhalb von ungefähr 0,25 Dioptrien für ein bestimmtes Rotationszentrum oder eine optische Haltestellung.

Wenn sich nun beispielsweise ein Zylinder auf der Okularlinsenoberfläche befand, heißt die Formel nicht 14.25, sondern 14.25 mit einem minus 1.75 Zylinder (Achse 90), und wenn die Linse mit einer perfekten Korrektur in dem 90 Grad Meridian strahlengeführt wäre, was in der weiter unten dargestellten Tabelle A der Fall ist, so hätte man eine erste Linsenoberfläche. Wenn sie dann mit einer torisch hinterlegten Oberfläche versehen wäre, so erhielte man beachtliche negative tangentiale sagittale Fehler, weil die Rechenvorschrift in horizontaler Richtung (im tangentialen Meridian) weniger streng ist und keine so große Abweichung von der Kugelform fordert bzw., um es anders auszudrücken, weil sie weniger Asphärizität fordert, um
den Tangentialfehler zu Null zu machen.
Folglich könnte man eine zweite Linse als eine 12.50
(14.25 - 1.75) Dioptrien-Linse für den horizontalen
Meridian entwerfen,und man würde dann die Tangentialkurven erhalten, die in der unten dargestellten Tabelle B
angegeben sind. Das einzige Problem besteht darin, daß
wir zwei verschiedene asphärische Kurven haben.
Man könnte nun mittels komplizierter Prozesse eine Linsenoberfläche mit einer gemeinsamen Kurve an ihrem Pol herstellen und sie in drei Dimensionen als XYZ-Kurve beschreiben, wobei die Koeffizienten in der vertikalen oder
Y-Richtung von der Tabelle A und die Koeffizienten in
der horizontalen oder Z-Richtung von der Tabelle B genommen würden. Das Ergebnis ist eine Linse, die den vertikalen Meridian für die Brechkraft 14.25 und gleichzeitig
den horizontalen Meridian für die Brechkraft 12.50 korrigiert. Die Schwierigkeit bei diesem Verfahren besteht
darin, daß es teuer ist und daß solche Oberflächen schwer
poliert werden können, wodurch auch eine Konkurrenzfähignicht gegeben ist.

Der Erfindung liegt deshalb die Aufgabe zugrunde, eine
Linse und ein Verfahren zur Herstellung dieser Linse vorzuschlagen, welche einfach im Aufbau bzw. einfach bezüglich der vorzunehmenden Schritte sind.

Diese Aufgabe wird hinsichtlich der asphärischen Linse
dadurch gelöst, daß ihr Pol bezüglich der normalen Sichtlinie durch diese Linse um einen bestimmten Betrag versetzt ist. Das Herstellungsverfahren dieser Linse ist
dadurch gekennzeichnet, daß es mittels Rotations-Kurven
erfolgt.

Der mit der Erfindung erzielte Vorteil besteht insbesondere darin, daß das Schleifen oder Polieren der erfindungsgemäßen Linse sehr einfach ist, weil keine komplizierten Kurven geschliffen oder poliert werden müssen, obgleich die Art der hergestellten Linse an sich kompliziert ist.

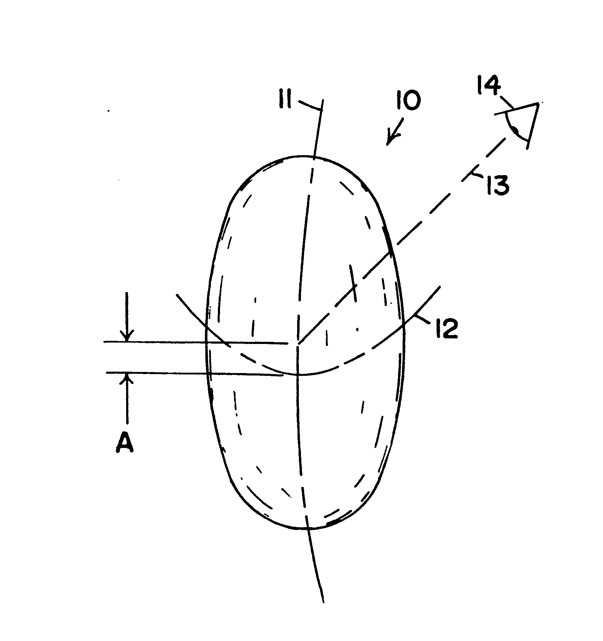

Weitere Vorteile der Erfindung ergeben sich aus der nachfolgenden Beschreibung der einzigen Figur.

In dieser Figur ist eine Linse mit einem versetzten Pol dargestellt. Es handelt sich hierbei um eine asphärische Linse 10, die einen vertikalen Meridian 11 und einen horizontalen Meridian 12 aufweist. Der Sehstrahl vom Auge 14 durch das Zentrum der Linse 10 ist mit der Bezugszahl 13 versehen.
Der Abstand A bezeichnet den Betrag des Polversatzes auf der Linse 10, der notwendig ist, um die erfindungsgemäße Linse herzustellen.
Weiter unten sind die Werte der Tangentialkurven von zwei verschiedenen Linsenoberflächen angegeben.

Die Tabelle A stellt eine asphärische Linse mit einer Brechkraft von 14.25 Dioptrien dar, während die Tabelle B eine Linse mit einer Brechkraft von 12.50 Dioptrien beschreibt.

| TABELLE A | | TABELLE B | |
|---|---|---|---|
| 14.25 D asphärisch | | 12.50 D asphärisch | |
| Y | Tangentialkurve | Y | Tangentialkurve |
| (MM) | (Dioptrien) | (MM) | (Dioptrien) |
| 0.5 | 15.243 | 0.5 | 15.151 |
| 1.0 | 15.238 | 1.0 | 15.148 |
| 1.5 | 15.229 | 1.5 | 15.144 |
| 2.0 | 15.218 | 2.0 | 15.138 |
| 2.5 | 15.203 | 2.5 | 15.130 |
| 3.0 | 15.184 | 3.0 | 15.120 |
| 3.5 | 15.162 | 3.5 | 15.109 |
| 4.0 | 15.137 | 4.0 | 15.095 |
| 4.5 | 15.108 | 4.5 | 15.080 |
| 5.0 | 15.076 | 5.0 | 15.063 |
| 5.5 | 15.041 | 5.5 | 15.044 |
| 6.0 | 15.002 | 6.0 | 15.023 |
| 6.5 | 14.960 | 6.5 | 15.000 |
| 7.0 | 14.914 | 7.0 | 14.976 |
| 7.5 | 14.865 | | |
| 8.0 | 14.812 | | |
| 8.5 | 14.756 | | |
| 9.0 | 14.697 | | |
| 9.5 | 14.634 | | |
| 10.0 | 14.567 | | |

Aus der Krümmungstabelle B für die 12.50 Dioptrien-Kurve ergibt sich, daß die Krümmungen zur Peripherie hin sehr schnell abflachen (die Brechkraft nimmt schneller ab), wie auch die Krümmungen der Tabelle A. Wenn wir in der Tabelle A ungefähr $3\frac{1}{2}$ bis 4 mm weiter als in der Tabelle B gehen, so stellen wir fest, daß die Krümmungen in den Tangentialmeridianen ungefähr gleich sind, obwohl es sich um zwei verschiedene Linsen bzw. um zwei verschiedene polynomische Ausdrücke handelt.

Anstelle von zwei Sätzen von Polynomen - falls wir das Polynom nehmen, welches der 12.50 Dioptrien-Linse genügen würde und falls wir das Zentrum der Linse im vertikalen Meridian nach unten versetzen, um beim Aufwärtssehen der Sichtlinie den Schnitt mit den asphärischen Flächen $3\frac{1}{2}$ bis 4 mm außerhalb des Pols zu erhalten und wenn derselbe Blickwinkel zur Seite gerichtet ist - würde man die unterschiedliche und größere Asphärizität erhalten, die für das Aufwärtssehen im Verhältnis zum horizontalen Sehen erforderlich ist. Somit beinhaltet die vorliegende Erfindung zwei Aspekte: der eine Aspekt betrifft den Umstand, daß eine Linse mit zwei verschiedenen Polynomen entworfen wird, mit einer dreidimensionalen asphärischen Oberfläche, wobei der horizontale Meridian einen Satz von Polynomen hat, der dazu dient, die horizontalen Aberrationen der Linse für schräges Sehen zu korrigieren und wobei der vertikale Meridian einen anderen Satz von Koeffizienten hat, der dazu dient, den vertikalen Meridian zu korrigieren. Die Gleichung würde folgendermaßen lauten:

$$X = Ay^2 + A^1Z^2 + By^4 + B^1Z^4 + Cy^6 + C^1Z^6 + DY^8 + D^1Z^8$$

etc. bis zur N-ten Potenz in solchen Termen, die für die Lösung des Problems gewünscht sind. Hierbei sind AB..und $A^1B^1$...Koeffizienten für die spezielle Linse und X,Y,Z die Koordinaten. Diese Gleichung würde wesentlich verbesserte Sehfelder für Aphakie-Patienten ergeben, bei denen torische oder zylindrische Bedingungen vorliegen.

Die vorliegende Erfindung erzielt im wesentlichen denselben Effekt mit einer Kurve, die eine Rotationsfigur beschreibt und die dezentriert sowie um eine Freistelle gedreht ist. Hierbei ist das bifokale Element so angeordnet, daß eine Verwendung möglich ist, als ob die Linse nicht dezentriert wäre. Eine solche Linse würde folgender Gleichung genügen:

$$X = A''y^2 + B''y^4 + C''y^6 + D''y^8 \ldots \text{usw.}$$

Hierin stellen A", B" die Koeffizienten für solche Linsen dar. Das Verfahren für den Entwurf der zweiten Linse entspricht dem gerade beschriebenen Verfahren für alle Asphärischen, mit denen eine marginale Brechkraft und astigmatische Fehler bei Augenlinsen oder -gläsern korrigiert werden. Ein sehr einfaches Verfahren ist es - für die horizontale Brechkraft, die tangentiale Fehler erhält, von denen man annimmt, daß sie im Hinblick auf den Bereich der Rechenvorschrift, der auf die Leerstelle ("blank") angesetzt werden soll - das ausgewählte Rotationszentrum oder die Halteposition zu entwerfen und dann durch Versuche mit vertikalen Dezentrierungen eine Dezentrierung zu finden, die den besten Kompromiß im vertikalen Meridian für die Meridian-Brechkraft darstellt.

Das Problem besteht indessen darin, den Wert des Zylinders auszuwählen, weil anders als bei herkömmlichen und symmetrischen Linsen, wo für Kugeln oder für Durchschnittsmeridiane korrigiert wird, hier nur ideal für einen Meridian in der Linse korrigiert wird. Auf entsprechende Weise korrigiert dieses System oder jedes dieser Systeme nur für einen Zylinder. Man hat festgestellt, daß mit einer bestimmten Zahl von torischen Rechenvorschriften die Spitze der Verteilung der torischen Vorschriften einen - 1.75 Dioptrien-Zylinder hat. Folglich werden die Linsen dieser Serien mit einem -1.75 Dioptrien-Zylinderkonzept entworfen. Mit der vorliegenden Erfindung ist man hingegen nicht auf die bekannten -1.75 D Linsen- oder Linsenserienentwürfe beschränkt. Vielmehr können Linsen oder Linsensysteme gemäß der Erfindung für einen Zylinder oder zwei Zylinder oder vier Zylinder entworfen werden, wobei das Prinzip stets das gleiche ist.

Das Prinzip besteht darin, daß man durch die Verwendung verschiedener Koeffizienten für die horizontale und die vertikale Richtung ein verbessertes Sehfeld erhält oder daß alternativ eine einzelne Rotationsfigur dezentriert wird, so daß im Ergebnis der Ausdruck vom optischen Zentrum nach außen eine asphärische Linse beschreibt, die in der Vertikalen schneller abfällt als in der Horizontalen.
Die Verbesserung, die mit der vorliegenden Erfindung tatsächlich erreicht wird, also die Entwurfskoeffizienten, wurden statt für eine durchschnittliche Zentrums-Rotations-Entfernung so ausgewählt, daß sie die Tangentialfehler für die längste und die kürzeste einer Verteilung von geeigneten Entfernungen ausgleichen. Diese längste und kürzeste Entfernung betragen 27mm auf der langen und 22,5 mm auf der kurzen Seite. Diese Linsenserie ist genau vertikal dezentriert, weil eine Untersuchung der Bedingungsgleichungen gezeigt hatte, daß die Mehrzahl der Gleichungen eine Zylinderachse oder mehrere Zylinderachsen aufwiesen, die innerhalb von 5 oder 10 Grad der Achse-90-Lage liegen. Alle Koeffizienten würden so angeordnet, daß der größte asphärische Abfall in der Horizontalen statt in der Vertikalen wäre. In der Tat besteht hierin ein wesentliches Merkmal der Erfindung. Eine Linse für Minuszylinder, welche die Achse in der Nähe der Horizontalen oder 180-Linie hat, würde den größten asphärischen Abfall in der Horizontalen und den geringsten in der Vertikalen haben.
Es wurde ein exzentrisches oder asymmetrisches asphärisches Oberflächen-Konzept für Aphakie-Linsen beschrieben.

Indessen ist eine Linsenserie nicht komplett, wenn nicht der ganze Bereich der Gleichungen bzw. der ganze Geltungsbereich angegeben wird.

Es wurden für Patienten, deren Zylinder sehr klein sind und eine Dezentrierung nicht erfordern bzw. die Zylinder haben, die eher nahe Null denn minus 1.75 sind und die deshalb durch eine asphärische Linse, die für -1.75 Zylinder ausgelegt ist, negativ beeinträchtigt wären, Lösungen vorgesehen. Die exzentrischen Serien werden also von einer zweiten Gattung begleitet, die nicht dezentriert ist. Die zentrierte Serie ist für solche Bedingungen vorgesehen, bei denen die Zylinder-Werte zwischen 0 und ungefähr -1.00 Dioptrien liegt und für solche Verhältnisse, bei denen die Zylinderachsen zwischen horizontal und 45 Grad liegen. Solche Patienten kommen nicht in den vollen Genuß der dezentrierten asphärischen Linse, sondern erhalten eine Sehfähigkeit, die mindestens ebensogut, wenn nicht besser, als mittels der meisten bekannten Linsen ist.

Auf diese Weise ermöglicht die vollständige Linsenserie mit zentrierten und dezentrierten Schemata eine Sicht, die der Sicht mit anderen Linsen für solche Patienten gleichzusetzen ist, die sphärische Bedingungen und schwache Zylinder aufweisen, und sie ist wesentlich besser als bei anderen Linsen, die stärkere Zylinder haben.

Der Hauptzweck dieser Linsen besteht darin, ein klares Gesichtsfeld mit scharfer Auflösung für unendliche Objektentfernungen zu erzielen, obwohl dieselben Prinzipien für Objekte im Nahbereich angewendet werden können. Alles was erforderlich ist, ist, daß die Entfernung des nahen Objekts in den ersten Term der Coddington Gleichungen für astigmatische Fehler entlang der Strahlen und der Hauptmeridiane mittels an sich bekannter Verfahren eingegeben werden. Es wurde von Davis in Abhandlungen und Patenten gezeigt, daß die beste Schärfe in Anwesenheit von seitlichen chromatischen Aberrationen erhalten wird, wenn der Tangentialfehler Null ist, was die Unschärfe des Bildes minimiert. Es ist indessen ebenfalls bekannt, daß viele Aphakie-Patienten nicht den vollen Bereich der Linse benutzen und daß Gewicht und kosmetische Erscheinung gewichtige Faktoren sind. Es wurde deshalb ein Versuch unternommen, der in einem gewissen Gegensatz zu den anderen bekannten Versuchen steht, und zwar insbesondere zu dem älteren US-Patent Nr. 3,169,247, wo Davis vorgeschlagen hat, daß der Tangentialfehler leicht plus bleiben solle. Bei der vorliegenden Erfindung kann der Tangentialfehler negativ werden, da es nur einen geringen Unterschied im Unschärfeindex oder in der Schärfe der sicht ausmacht, ob der Tangentialfehler ein plus ein Viertel einer Dioptrie oder minus ein Viertel einer Dioptrie ist. Wenn der Tangentialfehler minus wird, bedeutet dies jedoch, daß die Asphärizität zunimmt und daß die Dicke der Linse um einen kleinen aber beachtlichen Teil abnimmt und die geometrische Verzerrung ebenfalls abnimmt.

Eine weitere in Erwägung gezogene Maßnahme war die Auswahl des konkaven Basiskurvenbereichs. Frühere Patente von Davis, Bechtold, Tilyer et al zeigen, daß Linsen mit inneren Kurven um -3.00 Dioptrien bestimmte Vorteile haben. Wenn solche Linsen jedoch hergestellt wurden, damit sie in die modernen großen Gestelle passen, hatten sie ein klobiges Aussehen und erforderten eine zunehmende Dicke, obwohl es wünschenswert ist, etwas flachere Kurven zu verwenden. Wenn im übrigen die konkave Kurve um minus 3.5 Dioptrien herum beibehalten wird, wie dies bei einigen bekannten Linsen der Fall ist, wenn die Ausgangslage oder die Entfernung des Rotationszentrums zunimmt, was vorkommt, wenn der Rahmen oder das Gestell sich löst und die Linse langsam auf der Nase heruntergleitet, so wird die zentrale Brechkraft der Linse plus; d.h. Pluslinsen gewinnen Plus-Brechkraft, wenn sie vom Auge wegbewegt werden. Um das Problem zu kompensieren oder zu binden, geht der Tangentialfehler bei steilen konkaven Kurven in den postiven Bereich und addiert sich auf diese Weise zu dem Fehler, der durch das Heruntergleiten der Linse auf der Nase erzeugt wird.

Weil viele Menschen nicht durch das optische Zentrum, sondern sehr oft ein wenig darüber und zur Seite schauen, um eine bequemere Kopfhaltung einnehmen zu können, wobei die Linsen an der Nase heruntergleiten, verlieren sie dann, wenn sie steile innere Kurven haben, nicht nur Entfernungsschärfe wegen der zusätzlichen Plus-Brechkraft der zusätzlichen Scheitelentfernung, sondern auch zusätzliche Plus-Aberration, die durch die größere Entfernung des Rotationszentrums erzeugt wird. Wenn jedoch flachere Kurven verwendet werden, neigt die tangentiale Brechkraft dazu, minus zu werden und hilft dabei das größere plus zu kompensieren, das aufgrund der zusätzlichen Scheitelentfernung entstanden ist.

Folglich wurden bei der erfindungsgemäßen Linsenserie Kurven verwendet, von denen die steilste Kurve eines Bereichs, der irgendwo zwischen den beiden Meridianen liegt, nicht mehr als -2.00 Dioptrien beträgt.

Die erfindungsgemäßen Linsen können auf die üblichen und bekannten Arten hergestellt werden, beispielsweise durch Schleifen von Glas oder durch Pressen oder Gießen von Kunststoff. In allen diesen Fällen wird die Herstellung der Linsen stark vereinfacht, so daß preiswerte und konkurrenzfähige Linsen angeboten werden können.

Patentansprüche

1. Asphärische Augenlinse, dadurch gekennzeichnet, daß ihr Pol bezüglich der normalen Sichtlinie durch diese Linse (10) um einen bestimmten Betrag (A) versetzt ist.

2. Verfahren zur Herstellung der asphärischen Augenlinse nach Anspruch 1, dadurch gekennzeichnet, daß die Herstellung mittels Rotationskurven erfolgt.

3. Verfahren nach Anspruch 2, dadurch gekennzeichnet, daß die Linse (10) zwei senkrecht aufeinander stehende Meridiane aufweist, von denen der eine gegenüber dem Zentrum der Linse (10) um einen bestimmten Betrag versetzt ist.

4. Verfahren zur Herstellung einer asphärischen Linse mit einer Okular-Zylinderfläche und zwei aufeinander senkrecht stehenden Meridianen, gekennzeichnet durch folgende Schritte:
   - es wird eine Linsenfläche ausgewählt, die eine bestimmte Kugelbrechkraft hat;
   - es wird die Tangentialkurve hierfür ermittelt;
   - es wird eine zweite Linsenoberfläche ausgewählt, die eine Kugelbrechkraft hat;
   - es wird die Tangentialkurve für die zweite Linse ermittelt;
   - die zweite Linsenoberfläche wird so ausgewählt, daß der Unterschied zwischen der Brechkraft der ersten Linsenoberfläche und der zweiten Linsenoberfläche einen bestimmten Wert hat, der ungefähr gleich dem Zylinder-Wert der Linse ist.
   - die Tangentialkurven der ersten Linsenoberfläche und der zweiten Linsenoberflächen werden miteinander verglichen, um einen Abstand festzulegen, der im wesentlichen gleiche Werte der Tangentialkurven erzeugt;
- es wird eine Linse mit einem Linsenpol hergestellt, der von der normalen Sichtlinie durch die Linse um einen Betrag versetzt ist, der dem erwähnten Abstand entspricht.

5. Asphärische Augenlinse nach Anspruch 1, dadurch gekennzeichnet, daß sie für Aphakie-Patienten ausgelegt ist.

6. Asphärische Augenlinse nach Anspruch 1, dadurch gekennzeichnet, daß sie mittels der Vorschrift einer Gleichung hergestellt ist, die folgender Formel genügt

$$X = A''y^2 + B''y^4 + C''y^6 + D''y^8 \dots$$

wobei A", B" Koeffizienten sind und y eine Koordinate darstellt.

7. Asphärische Augenlinse nach Anspruch 6, dadurch gekennzeichnet, daß die Koeffizienten so ausgewählt sind, daß die Tangentialfehler für die kürzesten und längsten von geeigneten Abständen ausgeglichen werden.

8. Asphärische Augenlinse nach Anspruch 6, dadurch gekennzeichnet, daß der größere asphärische Abfall in der horizontalen Richtung stattfindet.

9. Verfahren nach Anspruch 2, dadurch gekennzeichnet, daß für die Herstellung Schleifköpfe vorgesehen sind, deren innere Kurvenform an die äußere Kurvenform der Linse angepaßt ist.

10. Verfahren nach Anspruch 4, <u>dadurch gekennzeichnet</u>, daß für Aphakie-Patienten, deren Zylinder eine Brechkraft von nahe Null aufweisen, auf den Versatz um den Betrag (A) verzichtet wird.